# EUROPÄISCHE PATENTANMELDUNG

(11) **EP 1 362 871 A1**
(43) Veröffentlichungstag der Anmeldung: **19.11.2003**
(21) Anmeldenummer: 03010086.1
(22) Anmeldetag: 03.05.2003
(51) Int. Cl.: C08G 18/32, C08G 18/75, C08L 101/00, C08L 67/00

(54) **Verfahren zur lösemittelfreien, kontinuierlichen Herstellung einer Zubereitung aus Polymeren und Duroplasten**

(30) Priorität: 10.05.2002 DE 10221049
(71) Anmelder: Degussa AG, 40474 Düsseldorf (DE)
(72) Erfinder: Weiss, Jörn Volker, Dr., 45721 Haltern am See (DE); Weihrauch, Thomas, Dr., 48249 Dülmen (DE); Grenda, Werner, 44627 Herne (DE); Herda, Silvia, 44623 Herne (DE); Behrendt, Klaus, 44628 Herne (DE)

(57) **Zusammenfassung**

Die Erfindung betrifft ein Verfahren zur lösemittelfreien, kontinuierlichen Herstellung einer polymeren Zusammensetzung enthaltend ein Polymer und ein Duroplast, wobei der Duroplast in der Polymermatrix aus seinen entsprechenden Ausgangskomponenten hergestellt wird, durch Umsetzung in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch Abkühlung.

## Beschreibung

Die Erfindung betrifft ein Verfahren zur lösemittelfreien, kontinuierlichen Herstellung einer polymeren Zusammensetzung enthaltend ein Polymer und ein Duroplast, wobei der Duroplast in der Polymermatrix aus seinen entsprechenden Ausgangskomponenten hergestellt wird, durch Umsetzung in einem Extruder, Intensiv-Kneter, Intensiv-Mischer oder statischen Mischer durch intensive Durchmischung und kurzzeitiger Reaktion bei Wärmezufuhr und nachfolgender Isolierung des Endproduktes durch Abkühlung.

Polymer-Blends (PB) sind Mischungen aus zwei oder mehr Polymeren bzw. Copolymeren. Diese werden hergestellt, um die Eigenschaften eines Basis-Polymeren zu verbessern. PB werden eingeteilt in homologe (HPB), mischbare (MPB), nicht-mischbare und verträgliche Produkte sowie Polymerlegierungen. HPB sind Mischungen, die aus zwei chemischen identischen Polymeren bestehen, die sich lediglich in ihren Molmassenverteilungen unterscheiden. Derartige Mischungen sind stets homogen, die Mischung ist thermodynamisch stabil. MPB sind dagegen Mischungen chemisch unterschiedlich aufgebauter Polymere, die aber dennoch thermodynamisch stabil sind. Dieser recht seltene Fall tritt z. B. dann auf, wenn die Segmente der zu mischenden Makromoleküle miteinander spezifisch attraktive Wechselwirkungen eingehen (z. B. Wasserstoffbrücken, Dipol-Dipol- oder Ion-Dipol-Wechselwirkungen). Die weitaus meisten chemisch unterschiedlichen Polymere sind von einem recht niedrigen Polymerisationsgrad aufwärts unverträglich und ihre Unverträglichkeit steigt mit wachsender Kettenlänge immer weiter, wie sich anhand statistischthermodynamischer Überlegungen und experimenteller Befunde zeigen lässt. Hier entscheidet vor allem die Zusammensetzung und Vorbehandlung der PB darüber, ob sie verträglich erscheinen. War nach dem Durchmischungsvorgang genügend Kettenbeweglichkeit und Zeit gegeben, dass sich größere phasengetrennte Bereiche ausbilden konnten, ist dies meist an einer Trübung des Materials festzustellen. Als verträgliche PB werden dann im Allgemeinen solche Produkte bezeichnet, die bei Betrachtung mit dem bloßen Auge als homogen erscheinen und deren physikalische Eigenschaften denen der Mischungskomponenten überlegen sind.

Durch Modifizierung eines Polymeren A durch Aufpfropfen geringer Anteile eines Polymeren B kann eine verbesserte Verträglichkeit der Polymeren A und B erreicht werden, ebenso durch Zugabe von AB-Blockcopolymeren. Pfropf- bzw. Blockcopolymere bilden in diesem System die Grenze zwischen A- u. B-Phasen und verhaften diese so miteinander. In diesen Fällen spricht man von Polymerlegierungen. Verträglichkeit kann auch durch Zusatz bestimmter Additive bewirkt werden. Andererseits ist durchaus nicht immer eine möglichst homogene Mischbarkeit erwünscht. So ist die Schlagzäh-Modifizierung von Polymeren wie dem Polystyrol oder die Herstellung thermoplastischer Elastomerer ohne Phasentrennung nicht denkbar. Wirtschaftlich spielen PB eine sehr bedeutende Rolle (Römpp Lexikon Chemie - Version 2.0, Stuttgart/New York: Georg Thieme Verlag 1999).

Lack-Polyesterharze tragen als funktionelle Gruppe häufig Hydroxyl-Gruppen. Zur Anwendung kommen flüssige wie auch feste Produkte. Ein Hauptanwendungsgebiet für diese Harze besteht in der Herstellung von Lacken und Beschichtungsstoffen die ebenfalls flüssig (z. B. Coil Coating Lacke) oder auch fest (Pulverlacke) sein können. Mit entsprechenden Härtern, die mit den OH-Gruppen (z. B. Polyisocyanate) abreagieren können, werden die Polyesterharze nach Applikation auf einem Substrat in der Regel bei erhöhter Temperatur zu einem dauerhaften und strapazierfähigen Beschichtungsfilm ausgehärtet.

Duroplaste sind Kunststoffe, die durch irreversible und enge Vernetzung über kovalente Bindungen aus Oligomeren (techn.: Präpolymeren), seltener aus Monomeren oder Polymeren entstehen. Das Wort "Duroplaste" wird dabei sowohl für die Rohstoffe vor der Vernetzung (s. Reaktionsharze) als auch als Sammelbezeichnung für die ausgehärteten, zumeist vollständig amorphen Harze verwendet. Duroplaste sind bei niedrigen Temperaturen Stahl-elastisch, und auch bei höheren Temperaturen können sie nicht viskos fließen, sondern verhalten sich bei sehr begrenzter Deformierbarkeit elastisch (Römpp Lexikon Chemie - Version 2.0, Stuttgart/New York: Georg Thieme Verlag 1999).

Die Zubereitung einer physikalischen Mischung aus Polymeren und speziell aus Polyesterharz und Duroplast könnte nun derart erfolgen, dass man den ausgehärteten Duroplast unter Aufwendung erheblicher mechanischer Energie vermahlt und anschließend das Mahlgut in den flüssigen bzw. geschmolzenen Polyester einarbeitet (z. B. mit Hilfe eines Rührkessels oder Extruders). Eine wirklich homogene Verteilung des Duroplasten im Polyester bis hinein in den molokularen Bereich wird dadurch natürlich nicht erreicht, da aufgrund der maximal erreichbaren Feinheit des Mahlgutes reale Grenzen für die Verteilung zwischen Polyester und Duroplast gesetzt sind.

Polymere Zusammensetzungen sind aus EM 01 226a bekannt. Sie werden, wie dort beschrieben, diskontinuierlich im Rührkessel hergestellt. Nachteilig an dieser Herstellmethode ist, dass die eingestzten Polymere (z.B. Polyester ) selbst bei Temperaturen von 180-220°C noch relativ hohe Viskositäten aufweisen, die das schnelle und effektive Einarbeiten der Duroplastausgangsstoffe ( z.B. Polyamin und Polyisocyanat ) erheblich erschweren. Da mit zunehmender Duroplastmenge im Reaktionsgemisch die Schmelzviskosität stark ansteigt, ist der Einsatz eines sehr starken Rühraggregates erforderlich, und andererseits die Ansatzgrösse des diskontinuierlichen Prozesses aufgrund der beschriebenen Gegebenheiten stark limitiert. Von daher ist die beschriebene Methode für die technische Herstellung dieser Produkte sehr aufwendig und äußerst ineffektiv.

Aufgabe der vorliegenden Erfindung war es daher, ein neues Verfahren zur Herstellung zu finden, das die genannten Nachteile des Standes der Technik nicht aufweist.

Überraschenderweise wurde nun gefunden, dass eine optimale Verteilung des Duroplasten in Polymeren und speziell in Polyestern dadurch gelingt, dass der Duroplast erst im Polymer bzw. Polyester hergestellt wird. Dazu werden die entsprechenden Monomere, Oligomere und/oder Präpolymere im Polymer/Polyester in einem Extruder, Intensiv-Kneter, Intensiv-Mischer oder statischen Mischer umgesetzt.

Gegenstand der Erfindung ist ein Verfahren zur lösemittelfreien, kontinuierlichen Herstellung einer polymeren Zusammensetzung, durch Umsetzung
A) mindestens eines Polymers,
B) mindestens eines Duroplasts in Mengen von 0,5 bis 50 Gew.-%, bezogen auf die Summe von A und B,
   durch Reaktion in der Polymermatrix A während der Umsetzung aus
   1) mindestens einer Ausgangskomponente mit NH₂-Gruppen und
   2) mindestens einer Ausgangskomponente mit NCO-Gruppen,
      wobei B 1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist, in einem Extruder, Intensiv-Kneter, Intensiv-Mischer oder statischen Mischer durch intensive Durchmischung und kurzzeitige Reaktion bei Wärmezufuhr und nachfolgender Isolierung des Endproduktes durch Abkühlung.

In einer bevorzugten Ausführungsform ist der Gegenstand ein Verfahren zur lösemittelfreien, kontinuierlichen Herstellung einer polymeren Zusammensetzung, durch Umsetzung
A) mindestens ein OH-Gruppen aufweisendes Polymer, bevorzugt ein Polyester und/oder Polyacrylat, mit einer OH-Funktionalität von ≥ 2
B) mindestens eines Duroplasts in Mengen von 0,5 bis 50 Gew.-%, bezogen auf die Summe von A und B,
   durch Reaktion in der Polymermatrix A während der Umsetzung aus
   1) mindestens einer Ausgangskomponente mit NH₂-Gruppen und
   2) mindestens einer Ausgangskomponente mit NCO-Gruppen,
      wobei B 1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist, in einem Extruder, Intensiv-Kneter, Intensiv-Mischer oder statischen Mischer durch intensive Durchmischung und kurzzeitige Reaktion bei Wärmezufuhr und nachfolgender Isolierung des Endproduktes durch Abkühlung.

Bei Duroplastgehalten von 0,5 bis 50 Gew.-%, bevorzugt von 2 bis zu 40 Gew.-%, werden homogene Duroplast/Polymer-Zusammensetzungen erhalten, die andere physikalische Eigenschaften (Schmelzbereich, Tg, Schmelzviskosität) aufweisen, als die separat vorliegenden, physikalisch gemischten Stoffe. Die chemische Reaktivität des an der Polymerisationsreaktion nicht teilnehmenden Polymers bleibt dagegen erhalten. Die resultierende polymere Zusammensetzung kann dann wie das Basispolymer weiter verarbeitet werden.

Als Polymere A sind prinzipiell alle bekannten geeignet wie z. B. Polyolefine, Polybutadiene, Polystyrole, Polysiloxane, Polyamide, soweit sie einen Schmelzpunkt von nicht höher als 220 °C besitzen. Auch Copolymere und Blockpolymerisate eignen sich als Polymer A, wie z. B. Styrol-Dien-Polymerisate.

Als Polymere mit einer Funktionalität von mindestens 2 eignen sich allgemein alle Polymere, die derartige Funktionen aufweisen, insbesondere jedoch hydroxylgruppenaufweisende Polyester und Polyacrylate.

Die bevorzugt eingesetzten hydroxylgruppenhaltigen Polyester werden hergestellt durch Polykondensation von geeigneten Di- und/oder Polycarbonsäuren, -estern und/oder Anhydriden und Di- und/oder Polyolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure bzw. - soweit zugänglich - deren Anhydride oder Ester. Besonders gut geeignet sind Isophthalsäure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethyl-olpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylen-glykol und Hydroxypivalinsäureneopentylglykolester, infrage. Bevorzugt sind Monoethylen-glykol, Neopentylglykol, Dicidol, Cyclohexandimethanol, Trimethylolpropan und Glycerin.

So hergestellte amorphe Polyester haben bevorzugt eine OH-Zahl von 15 - 200 mg KOH/g, einen Tg von 35 - 85 °C, einen Schmelzbereich von 60 bis 110 °C und eine Säurezahl von < 10 mg KOH/g. Die Molmassen betragen bevorzugt 2000 bis 7000.

Entsprechend hergestellte kristalline Polyester haben eine OH-Zahl von 15 bis 130 mg KOH/g, eine Tg von -50 bis 40°C, einen Schmelzbereich von 60 bis 130 °C und eine Säurezahl von < 8 mg KOH/g. Die Molmassen betragen bevorzugt 1800 bis 6500.

Die bevorzugt eingesetzten hydroxylgruppenhaltigen Acrylate mit einer OH-Zahl von 20 bis 150 mg/KOH, einer Molmasse von 1800 bis 6000 und einem Tg von 30 bis 90 °C werden hergestellt durch Polyaddition geeigneter ethylenisch ungesättigter Monomere. Beispiele für solche Verbindungen sind Styrol, α-Methylstyrol, C₂ - C₄₀-Alkylester der Acrylsäure oder C₁bis C₄₀-Alkylester der Methacrylsäure, wie Methylmethacrylat, Ethylacrylat, Propylmethacrylat, Isopropylacrylat, n-Butylmethycrylat, Isobuthylacrylat, tert.-Buthylmethacrylat, Pentylmethacrylat, n-Hexylmethacrylat, n-Heptylmethacrylat, n-Octylacrylat, 2-Ethylhexylacrylat, Decylmethacrylat, Laurylmethacrylat, Palmithylmethacrylat, Phenoxyethylmethacrylat, Phenylmethacrylat, Cyclohexymethacrylat, tert.-Butylcyclohexylacrylat, Buthylcyclohexylmethacrylat, Trimethylcyclohexylmethacrylat. Hydroxyalkyylester, α, β-ungesättigter Carbonsäuren wie der Acrylsäure und/oder Methacrylsäure mit einer primären OH-Gruppe und einem C₅ - C₁₈-Hydroxyalkylrest gehören ebenfalls zu dieser Gruppe, wie z. B. Hydroxyhexylacrylat, Hydroxyoctoylacrylat und die entsprechenden Methacrylate und Umsetzungsprodukte von Hydroxyethyl(meth)acrylat mit Caprolacton, sowie Monomere mit sekundären OH-Funktionen, wie Addukte aus Glycidyl(meth)acrylat und gesättigten kurzkettigen Säuren mit C₁ - C₃-Alkylresten, z. B: Essigsäure oder Propionsäure.

Erfindungsgemäß wird der Duroplast B in der Polymermatrix A aus seinen Ausgangskomponenten hergestellt. Die Ausgangskomponenten B1 und B2 weisen eine Funktionalität von mindestens 2,0 auf, wobei immer eine Ausgangskomponente mit einer Funktionalität von größer zwei in Mengen von 0,5 bis 100 Gew.-%, bezogen auf die Komponente B, in der Komponente B vorhanden sein muss. Prinzipiell ist es unerheblich, ob die Aminokomponente oder die Isocyanatkomponente die Funktionalität von mehr als zwei aufweist, bevorzugt wird jedoch die Isocyanatkomponente verwendet. Die ungefähren Molmassen der Duroplasten variieren von 2000 bis 70000, bevorzugt größer 4000.

Im Allgemeinen sind die Duroplaste B in Mengen von 0,5 bis 50 Gew.-%, bevorzugt von 2 bis 30 Gew.-%, bezogen auf die polymere Zusammensetzung, in der Zusammensetzung, enthalten.

Zur Herstellung der Duroplaste können als Komponente B2 alle bekannten aliphatischen, cycloaliphatischen, araliphatischen sowie aromatischen Isocyanate und deren Isocyanurate, falls zugänglich, in reiner Form oder als beliebige Mischungen untereinander verwendet werden. Beispielhaft seien aufgeführt: Cyclohexandiisocyanate, Methylcyclohexandiisocyanate, Ethylcyclohexandiisocyanate, Propylcyclohexandiisocyanate, Methyldiethylcyclohexandiiso-cyanate, Phenylendiisocyanate, Toluylendiisocyanate, Bis(isocyanatophenyl)methan, Propan-diisocyanate, Butandiisocyanate, Pentandiisocyanate, Hexandiisocyanate wie Hexamethyl-endiisocyanat (HDI) oder 1,5-Diisocyanato-2-methylpentan (MPDI), Heptandiisocyanate, Octandiisocyanate, Nonandiisocyanate wie 1,6-Diisocyanato-2,4,4-trimethylhexan oder 1,6-Diisocyanato-2,2,4-trimethylhexan (TMDI), Nonantriisocyanate (z. B. 4-Isocyanatomethyl-1,8-octandiisocyanat (TIN)), Dekandi- und triisocyanate, Undekandi- und -triisocyanate, Dodecandi- und -triisocyanate, Isophorondiisocyanat (IPDI), Bis(isocyanatomethyl-cyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI). Die Aufzählung versteht sich inklusive aller Regio- und Stereoisomeren der beispielhaft benannten Isocyanate. Bevorzugt werden HDI, IPDI, MPDI, TMDI , 1,3- und 1,4- H₆-XDI, NBDI sowie Mischungen aus HDI und IPDI eingesetzt. Bevorzugte Polyharnstoffe im Rahmen der Erfindung sind solche, die aus IPDI, IPDI-Isocyanurat, HDI oder HDI-Isocyanurat und beliebigen Gemischen daraus bestehen.

Im Rahmen der Erfindung können als Komponente B 1 alle aliphatischen, (cyclo)aliphatischen, cycloaliphatischen und aromatischen Diamine und/oder Polyamine (C₅ - C₁₈) eingesetzt werden.

Als Diamine sind prinzipiell 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methyl-amino)propylamin, 3-(Cyclohexylamino)propylamin, 4,4'-Diaminodicyclohexylmethan, Iso-phorondiamin, 4,7-Dioxadecan-1,10-diamin, N-(2-Aminoethyl)-1,2-ethandiamin, N-(3-Amino-propyl)-1,3-propandiamin, N,N"-1,2-Ethandiylbis-(1,3-propandiamin) sowie Hexamethyl-endiamine, die auch einen oder mehrere C₁-C₄-Alkylreste tragen können, geeignet.

Auch Mischungen der genannten Diamine sind verwendbar. Bevorzugt wird Isophorondiamin eingesetzt.

Polyamine mit mehr als 2 NH-Gruppen sind ebenfalls geeignet, wie z. B. 4-Aminomethyl-1,8-octandiamin, Diethylentriamin, Dipropylentriamin und Tetraethylenpentamin.

Im Allgemeinen werden Duroplaste mit einem NCO/NH₂-Verhältnis von 0,8 bis 1,2 zu 1 hergestellt. Bei Einsatz äquimolarer Mengen mit einem NCO/NH₂-Verhältnis von 1 zu 1 werden unendlich vernetzte, feste und spröde Duroplasten in den Polymeren erhalten.

Bevorzugte Duroplaste im Rahmen der Erfindung sind solche, die aus IPD und IPDI, und/oder IPDI-Isocyanurat und/oder HDI und/oder HDI-Isocyanurat bestehen. Diese weisen Molmassen von mehr als 4000 auf und enthalten mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat. Auch Polyharnstoffe aus reinen Isocyanuraten und IPD sind bevorzugt.

In der bevorzugten Ausführungsform der Erfindung sind 3 bis 20 Gew.-%, besonders bevorzugt 4, 5, 6, 7, 8, 9, 10, 11, 12, 13, 14, 15, 16, 17, 18, 19 Gew.-% Duroplast in der polymeren Zusammensetzung, insbesondere im OH-haltigen Polyester und Polyacrylat enthalten.

Das Prinzip des Verfahrens besteht darin, dass die Umsetzung der Reaktionspartner kontinuierlich in einem Extruder, Intensiv-Kneter, Intensiv-Mischer oder statischen Mischer durch intensive Durchmischung und kurzzeitige Reaktion bei Wärmezufuhr erfolgt.

Es werden Temperaturen von 10 bis 325 °C im Verfahren angewendet, wobei die Temperatur wie die Beispiele zeigen, je nach Produkt variiert.

Dies bedeutet, dass die Verweilzeit der Einsatzstoffe in den oben genannten Aggregaten üblicherweise 3 Sekunden bis 15 Minuten, bevorzugt 3 Sekunden bis 5 Minuten, besonders bevorzugt 5 bis 180 Sekunden beträgt. Die Reaktanden werden dabei kurzzeitig unter Wärmezufuhr bei Temperaturen von 25 bis 325 °C, bevorzugt von 50 bis 250 °C, ganz besonders bevorzugt von 70 bis 220 °C zur Reaktion gebracht. Je nach Art der Einsatzstoffe und der Endprodukte können diese Werte für Verweilzeit und Temperatur jedoch auch andere bevorzugte Bereiche einnehmen.

Es gelingt, das dabei entstehende, homogene, meist krümelige Material kontinuierlich auszutragen. Gegebenenfalls kann hier eine kontinuierliche Nachreaktion nachgeschaltet werden, ansonsten wird das heiße Produkt abgekühlt (z.B. auf einem Kühlband) und bei Bedarf weiter konfektioniert (z. B. gemahlen).

Als Aggregate sind Extruder wie Ein- oder Mehrschneckenextruder, insbesondere Zweischneckenextruder, Planetwalzenextruder oder Ringextruder, Intensiv-Kneter, Intensiv-Mischer, oder statische Mischer für das erfindungsgemäße Verfahren besonders geeignet und werden bevorzugt verwendet. Ganz besonders bevorzugt sind die o. g. Extruder.

Überraschend war es, dass die Umsetzung, die im diskontinuierlichen Verfahren bis zu 2 Stunden benötigt, in den genannten Aggregaten in einigen Sekunden vollständig abläuft. Darüber hinaus fällt das Produkt in fester mehr oder weniger körniger Form an, und kann nach erfolgter Abkühlung einer weiteren Aufarbeitung (z.B. Vermahlung) oder aber auch direkt einer Lagerung (Silo) oder auch Verpackung (Absackung) zugeführt werden. Von prinzipieller Natur ist die Tatsache, dass kurzzeitige thermische Belastung im Zusammenspiel mit der Mischwirkung der Aggregate ausreicht, um die Reaktionspartner vollständig oder weitestgehendst umzusetzen. Die Aggregate ermöglichen durch geeignete Bestückung der Mischkammern bzw. Zusammenstellung der Schneckengeometrien intensive rasche Durchmischung bei gleichzeitigem intensiven Wärmeaustausch. Andererseits ist auch eine gleichmäßige Durchströmung in Längsrichtung mit möglichst einheitlicher Verweilzeit gewährleistet. Außerdem muss eine unterschiedliche Temperierung in den einzelnen Gerätegehäusen- oder Abschnitten möglich sein.

Die Reaktionspartner werden den Aggregaten in der Regel in getrennten Produktströmen zudosiert. Bei mehr als zwei Produktströmen können diese auch gebündelt zugeführt werden. Die Stoffströme können auch geteilt werden und so in unterschiedlichen Anteilen an verschiedenen Stellen den Aggregaten zugeführt werden. Auf diese Weise werden gezielt Konzentrationsgradienten eingestellt, was die Vollständigkeit der Reaktion herbeiführen kann. Die Eintrittsstelle der Produktströme in der Reihenfolge kann variable und zeitlich versetzt gehandhabt werden.

Zur Vorreaktion und/oder Vervollständigung der Reaktion können mehrere Aggregate auch kombiniert werden.

Die der schnellen Reaktion nachgeschaltete Abkühlung kann in dem Reaktionsteil integriert sein, in Form einer mehrgehäusigen Ausführungsform wie bei Extrudern oder Conterna-Maschinen. Eingesetzt werden können außerdem: Rohrbündel, Rohrschlangen, Kühlwalzen, Luftförderer und Transportbänder aus Metall.

Die Konfektionierung wird je nach Viskosität des die Aggregate oder die Nachreaktionszone verlassenden Produktes zunächst durch weitere Abkühlung mittels entsprechender vorgenannter Gerätschaften auf eine geeignete Temperatur gebracht. Dann erfolgt die Pastillierung oder aber eine Zerkleinerung in eine gewünschte Partikelgröße mittels Walzenbrecher, Stiftmühle, Hammermühle, Sichtermühle, Schuppwalzen oder Ähnlichem. Gegenstand der Erfindung ist auch die polymere Zusammensetzung, erhalten durch ein lösemittelfreies, kontinuierliches Verfahren durch Umsetzung
A) mindestens eines Polymers,
B) mindestens eines Duroplasts in Mengen von 0,5 bis 50 Gew.-%, bezogen auf die Summe von A und B,
   durch Reaktion in der Polymermatrix A während der Umsetzung aus
   1) mindestens einer Ausgangskomponente mit NH₂-Gruppen
      und
   2) mindestens einer Ausgangskomponente mit NCO-Gruppen,
      wobei B1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist, in einem Extruder, Intensiv-Kneter, Intensiv-Mischer oder statischen Mischer durch intensive Durchmischung und kurzzeitige Reaktion bei Wärmezufuhr und nachfolgender Isolierung des Endproduktes durch Abkühlung.

Die erfindungsgemäße Zusammensetzung wird verwendet als Hauptkomponente, Basiskomponente oder Zusatzkomponente für Applikationen in Beschichtungsmitteln, Klebstoffen und Dicht- und Dämmstoffen.

Die Erfindung wird durch die folgenden Beispiele näher erläutert:

### Beispiele

### 1. Herstellung von Polyharnstoff in kristallinem Polyester durch Umsetzung einer Lösung von IPDI-Isocyanurat in Isophorondiisocyanat (IPDI) mit Isophorondiamin (IPD)

Der Polyharnstoff wird aus einer Mischung von 40 Gew.% IPDI-Isocyanurat und 60 Gew.% IPDI als Isocyanat-Komponente, sowie IPD als Amin, hergestellt.
Die Reaktion findet im kristallinen Polyester DYNACOLL 7390 statt. An der Gesamtrezeptur beträgt der DYNACOLL 7390-Anteil 79,8 Gew.-%.
Das molare Verhältnis von NCO-Gruppen zu NH₂-Gruppen beträgt 1 : 1. Neben den NH₂-Gruppen liegen die OH-Gruppen aus dem Polyester (OH-Zahl 31,8 mg KOH/g) vor.
Der Polyester wird als grobes Pulver in das erste Gehäuse eines gleichläufigen Zweischneckenextruders in einer Menge von 15,99 kg/h eingespeist.
Der Extruder besitzt separat temperierbare Gehäuse (heizbar und kühlbar).
Gehäuse 1 wird auf 30 °C, Gehäuse 2 auf 80 °C und die folgenden Gehäuse auf 120 bis 190 °C temperiert.
Die Isocyanat-Mischung wird bei einer Zulauftemperatur von 60 bis 80°C in Gehäuse 6 mit einer Durchsatzmenge von 2,66 kg/h dosiert.
Das Diamin wird in Gehäuse 3 bei einer Zulauftemperatur von 70 bis 95 °C mit einer Durchsatzmenge von 1,38 kg/h dosiert.
Der Gesamtdurchsatz liegt damit bei 20,03 kg/h.
Die Austrittstemperatur liegt zwischen 100 und 115 °C.
Die Extruderdrehzahl liegt bei 350 bis 450 UPM.
Das Produkt tritt als weiße Paste aus, die auf einem Kühlband abgekühlt und ausgehärtet wird.

### 2. Herstellung von Polyharnstoff in amorphem Polyester durch Umsetzung einer Lösung von IPDI-Isocyanurat in Isophorondiisocyanat (IPDI) mit Isophorondiamin (IPD)

Der Polyharnstoff wird aus einer Mischung von 40 Gew.% IPDI-Isocyanurat und 60 Gew.-% IPDI als Isocyanat-Komponente, sowie IPD als Amin, hergestellt.
Die Reaktion findet im amorphem Polyester URALAC P1580 statt. An der Gesamtrezeptur beträgt der URALAC P1580-Anteil 79,9 Gew.-%.
Das molare Verhältnis von NCO-Gruppen zu NH₂-Gruppen beträgt 1 : 1. Neben den NH₂-Gruppen liegen die OH-Gruppen aus dem Polyester (OH-Zahl 78,0 mg KOH/g) vor.
Der Polyester wird als grobes Pulver in das erste Gehäuse eines gleichläufigen Zweischneckenextruders in einer Menge von 15,99 kg/h eingespeist.
Der Extruder besitzt separat temperierbare Gehäuse (heizbar und kühlbar).
Gehäuse 1 wird auf 30 °C, Gehäuse 2 auf 80 °C und die folgenden Gehäuse auf 120 bis 190 °C temperiert.
Die Isocyanat-Mischung wird bei einer Zulauftemperatur von 60 bis 80 °C in Gehäuse 6 mit einer Durchsatzmenge von 2,66 kg/h dosiert.
Das Diamin wird in Gehäuse 3 bei einer Zulauftemperatur von 70 bis 95 °C mit einer Durchsatzmenge von 1,37 kg/h dosiert.
Der Gesamtdurchsatz liegt damit bei 20,02 kg/h.
Die Austrittstemperatur liegt zwischen 170 und 260 °C.
Die Extruderdrehzahl liegt bei 350 bis 450 UPM.
Das Produkt tritt als milchig weißer, viskoser Film aus, der auf einem Kühlband abgekühlt und ausgehärtet wird.

## Patentansprüche

1. Verfahren zur lösemittelfreien, kontinuierlichen Herstellung einer polymeren Zusammensetzung, durch Umsetzung
A) mindestens eines Polymers,
B) mindestens eines Duroplasts in Mengen von 0,5 bis 50 Gew.-%, bezogen auf die Summe von A und B,
durch Reaktion in der Polymermatrix A während der Umsetzung aus
1) mindestens einer Ausgangskomponente mit NH₂-Gruppen und
2) mindestens einer Ausgangskomponente mit NCO-Gruppen,
wobei B1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist, in einem Extruder, Intensiv-Kneter, Intensiv-Mischer oder statischen Mischer durch intensive Durchmischung und kurzzeitige Reaktion bei Wärmezufuhr und nachfolgender Isolierung des Endproduktes durch Abkühlung.

2. Verfahren nach Anspruch 1, durch Umsetzung
A) mindestens eines Polymers mit einer Funktionalität von ≥ 2
B) mindestens eines Duroplasts in Mengen von 0,5 bis 50 Gew.-%, bezogen auf die Summe von A und B,
durch Reaktion in der Polymermatrix A während der Umsetzung aus
1) mindestens einer Ausgangskomponente mit NH₂-Gruppen und
2) mindestens einer Ausgangskomponente mit NCO-Gruppen,
wobei B1 und B2 gleichzeitig und unabhängig eine Funktionalität von ≥ 2 aufweisen und mindestens eine Ausgangskomponente mit einer Funktionalität von > 2 in Mengen von 0,5 bis 100 Gew.-% vorhanden ist.

3. Verfahren nach Anspruch 2, durch Umsetzung
A) mindestens eines OH-Gruppen aufweisendes Polymers mit einer OH-Funktionalität von ≥ 2,
B) mindestens eines Duroplasts in Mengen von 0,5 bis 50 Gew.-%, bezogen auf die Summe von A und B,
durch Reaktion in der Polymermatrix A während der Umsetzung aus
1) mindestens einer Ausgangskomponente mit NH₂-Gruppen und
2) mindestens einer Ausgangskomponente mit NCO-Gruppen,
wobei B1 und B2 gleichzeitig und unabhängig eine Funktionalität von ≥ 2 aufweisen und mindestens eine Ausgangskomponente mit einer Funktionalität von > 2 in Mengen von 0,5 bis 100 Gew.-% vorhanden ist.

4. Verfahren nach Anspruch 1,
**dadurch gekennzeichnet,**
**dass** als Polymere A Polyolefine, Polybutadiene, Polystyrole, Polysiloxane, Polyamide allein oder in Mischungen eingesetzt werden.

5. Verfahren nach Anspruch 3,
**dadurch gekennzeichnet,**
**dass** als Polymer A OH-Gruppen aufweisende Polyester und/oder Polyacrylate eingesetzt werden.

6. Verfahren nach Anspruch 5,
**dadurch gekennzeichnet,**
**dass** amorphe und/oder (semi)kristalline Polyester eingesetzt werden.

7. Verfahren nach Anspruch 6,
**dadurch gekennzeichnet,**
**dass** amorphe Polyester mit einem Tg von 35 bis 85 °C, einem Schmelzbereich von 60 bis 110 °C, einer Molmasse von 2000 bis 7000 und einer OH-Zahl von 15 bis 200 mg KOH/g eingesetzt werden.

8. Verfahren nach Anspruch 6,
**dadurch gekennzeichnet, dass** kristalline Polyester mit einem Tg von -50 bis 40 °C, einem Schmelzbereich von 60 bis 130 °C, einer Molmasse von 1800 bis 6500 und einer OH-Zahl von 15 bis 130 mg KOH/g eingesetzt werden.

9. Verfahren nach Anspruch 6 bis 8,
**dadurch gekennzeichnet,**
**dass** OH-gruppenhaltige Polyester, aufgebaut aus den Ausgangskomponenten Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure und/oder - soweit zugänglich - deren Anhydride und/oder Ester eingesetzt werden.

10. Verfahren nach Anspruch 6 bis 9,
**dadurch gekennzeichnet, dass** OH-gruppenhaltige Polyester, aufgebaut aus den Diolen und/oder Polyolen Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-pro-pandiol-1,3, 2-Methyl-pentandiol-1,5, 2,2,4(2,4,4)-Trimethylhexandiol-1,6, Glycerin, Tri-methyl-olpropan, Trimethylolethan, Hexantriol-1,2,6, Butantriol-1,2,4, Tris-(β-hydroxy-ethyl)-isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylen-glykol und/oder Hydroxypivalinsäureneopentylglykolester eingesetzt werden.

11. Verfahren nach Anspruch 5,
**dadurch gekennzeichnet,**
**dass** OH-gruppenhaltige Polyacrylate mit einer OH-Zahl von 20 bis 150 mg KOH/g, einer Molmasse von 1800 bis 6000 und einem Tg von 30 bis 90 °C eingesetzt werden.

12. Verfahren nach mindestens einem der vorherigen Ansprüche,
**dadurch gekennzeichnet,**
**dass** als Komponente B1 aliphatische, cycloaliphatische, araliphatische und/oder aromatische Isocyanate und/oder Isocyanurate eingesetzt werden.

13. Verfahren nach Anspruch 12,
**dadurch gekennzeichnet,**
**dass** Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylen-diisocyanate, Toluylendiisocyanate, Bis(isocyanatophenyl)methan, Propandiisocyanate, Butandiidocyanate, Pentandiisocyanate, Hexandiisocyanate, wie Hexamethylendiisocyanat (HDI) oder 1,5-Diisocyanato-2-methylpentan (MPDI), Heptandiisocyanate, Octan-diisocyanate, Nonandiisocyanate, wie 1,6-Diisocyanato-2-4-4-trimethylhexan oder 1,6-Diisocyanato-2,2,4-trimethylhexan (TMDI), Nonantriisocyanate, wie 4-Iso-cyanatomethy-1,8-octandiisocyanat (TIN), Dekandi- und triisocyanate, Undekandi- und -triisocyanate, Dodecandi- und -triisocyanate, Isophorondiisocyanat (IPDI), Bis(isocyanatomethyl-cyclohexyl)methan (H₁₂MDI), Isocyanatomethylmethylcyclohexyl-isocyanate, 2,5(2,6)-Bis(isocyanatomethyl)bicyclo[2.2.1]heptan (NBDI), 1,3-Bis(isocyanatomethyl)-cyclohexan (1,3-H₆-XDI) oder 1,4-Bis(isocyanatomethyl)cyclohexan (1,4-H₆-XDI), oder deren Isocyanurate soweit zugänglich, allein oder in Mischungen eingesetzt werden.

14. Verfahren nach Anspruch 12,
**dadurch gekennzeichnet,**
**dass** Isophorondiisocyanat (IPDI) und/oder Hexamethylendiisocyanat (HDI) und/oder deren Isocyanurate eingesetzt werden.

15. Verfahren nach mindestens einem der vorherigen Ansprüche,
**dadurch gekennzeichnet,**
**dass** als Komponente B2 aliphatische, cycloaliphatische, araliphatische und/oder aromatische Diamine eingesetzt werden.

16. Verfahren nach Anspruch 15,
**dadurch gekennzeichnet,**
**dass** als Diamine 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclo-hexylmethan, Isophorondiamin (IPD), 4,7-Dioxadecan-1,10-diamin, N-(2-Aminoethyl)-1,2-ethyndiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, allein oder in Mischungen eingesetzt wird.

17. Verfahren nach mindestens einem der Ansprüche 1 bis 16,
**dadurch gekennzeichnet,**
**dass** ein Duroplast aus IPDI, HDI-Isocyanurat und Isophorondiamin (IPD) enthalten ist.

18. Verfahren nach mindestens einem der Ansprüche 1 bis 16,
**dadurch gekennzeichnet,**
**dass** ein Duroplast aus dem Isocyanurat des IPDI und IPD enthalten ist.

19. Verfahren nach mindestens einem der Ansprüche 1 bis 16,
**dadurch gekennzeichnet,**
**dass** ein Duroplast aus einem Gemisch von IPDI und IPDI-Isocyanurat und IPD enthalten ist.

20. Verfahren nach mindestens einem der Ansprüche 1 bis 16,
**dadurch gekennzeichnet,**
**dass** ein Duroplast aus IPDI-Isocyanurat, HDI und IPD enthalten ist.

21. Verfahren nach mindestens einem der Ansprüche 1 bis 16,
**dadurch gekennzeichnet,**
**dass** ein Duroplast aus einem Gemisch von HDI und HDI-Isocyanurat und IPD enthalten ist.

22. Verfahren nach mindestens einem der Ansprüche 1 bis 16,
**dadurch gekennzeichnet,**
**dass** ein Duroplast aus einem Gemisch von IPDI- und HDI-Isocyanurat und IPD enthalten ist.

23. Verfahren nach mindestens einem der Ansprüche 1 bis 16,
**dadurch gekennzeichnet,**
**dass** ein Duroplast aus einem Gemisch von IPDI und IPDI-Isocyanurat und HDI und HDI-Isocyanurat enthalten ist.

24. Verfahren nach mindestens einem der Ansprüche 1 bis 23,
**dadurch gekennzeichnet,**
**dass** die Umsetzung zum Duroplast in einem NCO/NH₂-Verhältnis von 0,8 bis 1,2 zu 1 erfolgt.

25. Verfahren nach mindestens einem der Ansprüche 1 bis 24,
**dadurch gekennzeichnet,**
**dass** der Duroplast eine Molmasse von mindestens 4000 aufweist und mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat.

26. Verfahren nach mindestens einem der Ansprüche 1 bis 25,
**dadurch gekennzeichnet,**
**dass** 3 bis 30 Gew.-% Duroplast in der polymeren Zusammensetzung, insbesondere in OH-haltigem Polyester und Acrylat enthalten sind.

27. Verfahren nach mindestens einem der vorherigen Ansprüche,
**dadurch gekennzeichnet,**
**dass** die Reaktion im Ein-, Zwei- oder Mehrschneckenextruder, Ringextruder oder Planetwalzenextruder erfolgt.

28. Verfahren nach Anspruch 27,
**dadurch gekennzeichnet,**
**dass** die Reaktion in einem Zweischneckenextruder erfolgt.

29. Verfahren nach einem der Ansprüche 1 bis 27,
**dadurch gekennzeichnet,**
**dass** die Reaktion in einem Intensiv-Mischer oder Intensiv-Kneter erfolgt.

30. Verfahren nach einem der Ansprüche 1 bis 27,
**dadurch gekennzeichnet,**
**dass** die Reaktion in einem statischen Mischer erfolgt.

31. Verfahren nach mindestens einem der vorherigen Ansprüche,
**dadurch gekennzeichnet,**
**dass** die Reaktion in einem Extruder, Intensiv-Kneter, Intensiv-Mischer oder statischem Mischer mit mehreren gleichen oder verschiedenen Gehäusen, die unabhängig voneinander thermisch gesteuert werden können, erfolgt.

32. Verfahren nach mindestens einem der vorherigen Ansprüche,
**dadurch gekennzeichnet,**
**dass** die Temperatur im Extruder, Intensiv-Kneter, Intensiv-Mischer oder statischen Mischer 10 bis 325 °C beträgt.

33. Verfahren nach mindestens einem der vorherigen Ansprüche,
**dadurch gekennzeichnet,**
**dass** der Extruder oder Intensiv-Kneter durch geeignete Bestückung der Mischkammern und Zusammenstellung der Schneckengeometrie einerseits zu einer intensiven raschen Durchmischung und schnellen Reaktion bei gleichzeitigem intensiven Wärmeaustausch führen, und andererseits eine gleichmäßige Durchströmung in Längsrichtung mit möglichst einheitlicher Verweilzeit bewirken.

34. Verfahren nach mindestens einem der vorherigen Ansprüche,
**dadurch gekennzeichnet,**
**dass** die Reaktion in Gegenwart von Katalysatoren und/oder Zuschlagstoffen erfolgt.

35. Verfahren nach mindestens einem der vorherigen Ansprüche,
**dadurch gekennzeichnet,**
**dass** die Einsatzstoffe und/oder Katalysator und/oder Zuschlagstoffe gemeinsam oder in getrennten Produktströmen, in flüssiger oder fester Form, dem Extruder, Intensiv-Kneter, Intensiv-Mischer oder statischen Mischer zugeführt werden.

36. Verfahren nach Anspruch 35,
**dadurch gekennzeichnet,**
**dass** die Zuschlagstoffe gemeinsam mit den Einsatzstoffen zu einem Produktstrom zusammengefasst werden.

37. Verfahren nach mindestens einem der vorherigen Ansprüche,
**dadurch gekennzeichnet,**
**dass** bei mehr als zwei Produktströmen diese gebündelt zugeführt werden.

38. Verfahren nach mindestens einem der vorherigen Ansprüche,
**dadurch gekennzeichnet,**
**dass** ein oder beide Produktströme geteilt werden.

39. Verfahren nach mindestens einem der vorherigen Ansprüche,
**dadurch gekennzeichnet,**
**dass** der Katalysator mit einem der Stoffströme zusammengefasst wird oder in einem der Ströme gelöst vorliegt.

40. Verfahren nach mindestens einem der vorherigen Ansprüche,
**dadurch gekennzeichnet,**
**dass** der Zuschlagstoff mit einem der Stoffströme zusammengefasst wird oder in einem der Ströme gelöst vorliegt.

41. Verfahren nach mindestens einem der vorherigen Ansprüchen,
**dadurch gekennzeichnet,**
**dass** die Eintrittstelle der Produktströme in der Reihenfolge variabel und zeitlich versetzt gehandhabt wird.

42. Verfahren nach mindestens einem der vorherigen Ansprüche,
**dadurch gekennzeichnet,**
**dass** eine Nachreaktion angefügt wird.

43. Verfahren nach Anspruch 42,
**dadurch gekennzeichnet,**
**dass** die Nachreaktion in kontinuierlich betriebenen Systemen, wie Rohrreaktoren, gerührten oder ungerührten Verweilzeitbehältern, Rohrbündeln, erfolgt.

44. Verfahren nach mindestens einem der vorherigen Ansprüche,
**dadurch gekennzeichnet,**
**dass** die Konfektionierung je nach Viskosität des den Extruder, Intensiv-Kneter, Intensiv-Mischer oder statischen Mischer und/oder die Nachreaktionszone verlassenden Produktes zunächst durch weitere Abkühlung auf eine zur späteren Abfüllung/Silierung hinreichende Temperatur eingeleitet wird.

45. Verfahren nach mindestens einem der Ansprüche 1 bis 44,
**dadurch gekennzeichnet,**
**dass** die Verweilzeit der Einsatzstoffe 3 Sekunden bis 15 Minuten, bevorzugt 3 Sekunden bis 5 Minuten, besonders bevorzugt 5 bis 180 Sekunden, beträgt.

46. Verfahren nach mindestens einem der Ansprüche 1 bis 45,
**dadurch gekennzeichnet,**
**dass** die Reaktion bei Temperaturen von 25 bis 325 °C, bevorzugt von 50 bis 250 °C, besonders bevorzugt von 70 bis 220 °C, erfolgt.

47. Polymere Zusammensetzung, erhalten durch ein lösemittelfreies, kontinuierliches Verfahren durch Umsetzung
A) mindestens eines Polymers,
B) mindestens eines Duroplasts in Mengen von 0,5 bis 50 Gew.-%, bezogen auf die Summe von A und B,
durch Reaktion in der Polymermatrix A während der Umsetzung aus
1) mindestens einer Ausgangskomponente mit NH₂-Gruppen und
2) mindestens einer Ausgangskomponente mit NCO-Gruppen,
wobei B1 und B2 gleichzeitig oder unabhängig eine Funktionalität von ≥ 2 aufweisen und mindestens eine Ausgangskomponente mit einer Funktionalität von > 2 in Mengen von 0,5 bis 100 Gew.-% vorhanden ist, in einem Extruder, Intensiv-Kneter, Intensiv-Mischer oder statischen Mischer durch intensive Durchmischung und kurzzeitige Reaktion bei Wärmezufuhr und nachfolgender Isolierung des Endproduktes durch Abkühlung.

48. Polymere Zusammensetzung nach Anspruch 47,
**dadurch gekennzeichnet, dass** Verbindungen nach mindestens einem der Ansprüche 2 bis 26 und Verfahrensparameter nach mindestens einem der Ansprüche 27 bis 46 verwendet werden.

49. Verwendung der polymeren Zusammensetzung nach mindestens einem der vorherigen Ansprüche als Hauptkomponente, Basiskomponente oder Zusatzkomponente für Applikationen in Beschichtungsmittel, Klebstoffen und Dicht- und Dämmstoffen.
